# EUROPEAN PATENT APPLICATION

(11) **EP 4 835 754 A1**
(43) Date of publication of application: **04.11.2026**
(21) Application number: 26173887.6
(22) Date of filing: 22.04.2026
(51) Int. Cl.: G06N 10/60, G06N 5/01, G06N 10/20

(54) **COMPUTER PROGRAM, QUANTUM CIRCUIT CONTROL METHOD, AND INFORMATION PROCESSING APPARATUS**

(30) Priority: 02.05.2025 JP 2025076697
(71) Applicant: FUJITSU LIMITED, Kawasaki-shi, Kanagawa 211-8588 (JP)
(72) Inventor: MATSUMOTO, Kazuhiro, Kawasaki-shi, 211-8588 (JP)
(74) Representative: Haseltine Lake Kempner LLP

(57) **Abstract**

An information processing apparatus receives a Hamiltonian for calculating an energy of an analysis target from a quantum state. The information processing apparatus combines, with reference to a database associating a plurality of first quantum circuits each configured to generate a quantum state corresponding to parameter values with a plurality of first optimization methods each configured to iteratively update the assigned parameter values, each of the plurality of first quantum circuits with the Hamiltonian, and calculates a plurality of first energies. The information processing apparatus determines a second quantum circuit and a second optimization method to be used for the analysis target, based on the plurality of first energies and the database. The information processing apparatus calculates a second energy of the analysis target based on the second quantum circuit, the Hamiltonian, and the second optimization method.

## Description

### FIELD

The embodiments discussed herein relate to a computer program, a quantum circuit control method, and an information processing apparatus.

### BACKGROUND

An information processing apparatus may execute a variational quantum eigensolver (VQE). For example, the information processing apparatus may perform, using VQE, quantum chemical calculations for calculating the ground-state energy of a substance such as a molecule. The VQE generates a quantum state according to a parameterized quantum circuit, and calculates an energy of an analysis target from the quantum state according to a Hamiltonian corresponding to the analysis target. For example, in the quantum chemical calculations, the quantum state represents an electronic configuration of a molecule, and the Hamiltonian is determined from the structure of the molecule.

The VQE updates parameter values assigned to the parameters of the quantum circuit according to an optimization method so that the calculated energy becomes smaller. The VQE repeats generating a quantum state, calculating an energy, and updating the parameter values until the calculated energy becomes sufficiently small. The generation of a quantum state and the calculation of an energy may be performed by a quantum computer. Alternatively, the generation of a quantum state and the calculation of an energy may be performed by a quantum simulator, which simulates quantum operations on a classical computer.

In this connection, there exists a technique in which a computational procedure of a variational quantum eigensolver is replaced with a neural network using a quantum circuit. This technique involves transfer learning in which parameter values of a first quantum circuit trained for a first task are transferred to a second quantum circuit for a second task. See, for example, the following literatures.
International Publication Pamphlet No. WO 2021/006992
U.S. Patent Application Publication No. 2022/0399083
U.S. Patent Application Publication No. 2023/0196153
Japanese Laid-open Patent Publication No. 2024-135822

In VQE, an appropriate quantum circuit for generating a quantum state may depend on an analysis target, and an appropriate optimization method for updating parameter values of the quantum circuit may also depend on the analysis target. Such an appropriate quantum circuit and optimization method are not necessarily readily determined from the analysis target itself.

Therefore, a user may select, by trial and error, a quantum circuit to be used and an optimization method to be used. The use of an inappropriate quantum circuit or an inappropriate optimization method may slow energy convergence, thereby increasing the VQE execution time.

### SUMMARY

In one aspect, it is desirable to execute a variational quantum eigensolver efficiently.

In one aspect, there is provided a computer program that causes a computer to perform a process including: receiving a Hamiltonian for calculating an energy of an analysis target from a quantum state; combining, with reference to a database associating a plurality of first quantum circuits with a plurality of first optimization methods, each of the plurality of first quantum circuits with the Hamiltonian, and calculating a plurality of first energies corresponding to the plurality of first quantum circuits, each of the plurality of first quantum circuits being configured to generate a quantum state corresponding to parameter values assigned thereto, each of the plurality of first optimization methods being configured to iteratively update the assigned parameter values; determining a second quantum circuit and a second optimization method to be used for the analysis target, based on the plurality of first energies and the database; and calculating a second energy of the analysis target based on the second quantum circuit, the Hamiltonian, and the second optimization method.

### BRIEF DESCRIPTION OF DRAWINGS

The invention is described, by way of example only, with reference to the following drawings, in which:
FIG. 1 is a diagram for describing an information processing apparatus according to a first embodiment;
FIG. 2 illustrates an example of hardware of an information processing apparatus according to a second embodiment;
FIG. 3 illustrates an example of a configuration of a variational quantum eigensolver;
FIG. 4 illustrates an example of a structure of a history database;
FIG. 5 illustrates examples of quantum circuits included in the history database;
FIG. 6 illustrates examples of a repetition count for a quantum circuit;
FIG. 7 illustrates examples of a combination of a quantum circuit, a repetition count, and an optimization method;
FIG. 8 illustrates an example of a structure of a Hamiltonian matrix;
FIG. 9 illustrates an example of non-zero elements stored in a Hamiltonian matrix;
FIG. 10 illustrates an example of an output vector;
FIG. 11 is a block diagram illustrating an example of functions of the information processing apparatus;
FIG. 12 is a flowchart illustrating an example procedure of a variational quantum eigensolver;
FIG. 13 illustrates an example of combining quantum circuits;
FIG. 14 illustrates an example of qubits corresponding to non-zero elements;
FIG. 15 is a flowchart illustrating an example procedure of quantum circuit extension; and
FIG. 16 is a flowchart illustrating an example procedure of quantum circuit simplification.

### DESCRIPTION OF EMBODIMENTS

Hereinafter, embodiments will be described with reference to the drawings.

### (a) First Embodiment

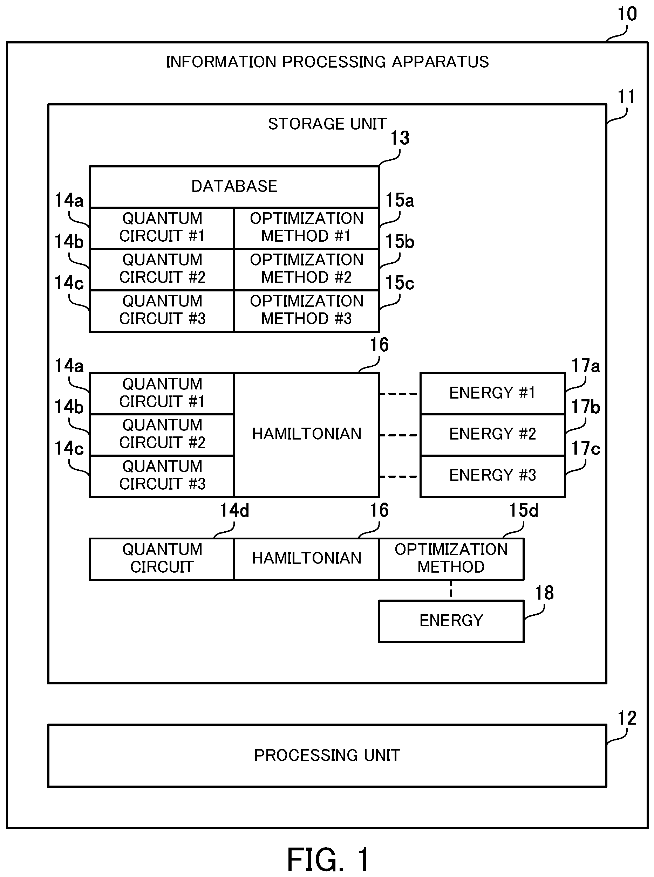

FIG. 1 is a diagram for describing an information processing apparatus according to a first embodiment. An information processing apparatus 10 of the first embodiment executes a VQE. The information processing apparatus 10 is, for example, a von Neumann classical computer. The information processing apparatus 10 may use a quantum gate-based quantum computer connected to the information processing apparatus 10. Alternatively, the information processing apparatus 10 may use a quantum simulator that simulates quantum operations performed by a quantum computer on a classical computer. The information processing apparatus 10 may be a client apparatus or a server apparatus. In addition, the information processing apparatus 10 may be referred to as a computer or a quantum circuit control device.

The information processing apparatus 10 includes a storage unit 11 and a processing unit 12. The storage unit 11 may be a volatile memory such as a random access memory (RAM). Alternatively, the storage unit 11 may be a non-volatile storage such as a hard disk drive (HDD) or a solid state drive (SSD).

The processing unit 12 is, for example, a processor such as a central processing unit (CPU), a graphics processing unit (GPU), or a digital signal processor (DSP). Note that the processing unit 12 may include an electronic circuit such as an application specific integrated circuit (ASIC) or a field programmable gate array (FPGA). The processor executes, for example, a program stored in a memory such as a RAM. The processor may be referred to as processor circuitry. A set of processors may be referred to as a multiprocessor or simply as a "processor". Different processes among a plurality of processes to be described below may be performed by different processors.

The storage unit 11 stores a database 13. The database 13 may be a history database indicating past VQE executions. The database 13 associates a plurality of quantum circuits including quantum circuits 14a, 14b, and 14c with a plurality of optimization methods including optimization methods 15a, 15b, and 15c. The database 13 may store a plurality of records each indicating one quantum circuit and one optimization method. For example, the database 13 associates the quantum circuit 14a with the optimization method 15a, associates the quantum circuit 14b with the optimization method 15b, and associates the quantum circuit 14c with the optimization method 15c.

A quantum circuit is a quantum computation model that describes quantum operations by a combination of quantum gates. The quantum circuits of the first embodiment are parameterized quantum circuits. A parameterized quantum circuit becomes a specific executable quantum circuit when parameter values are assigned to its parameters. A quantum circuit generates a quantum state corresponding to the assigned parameter values. A quantum circuit may include a plurality of quantum gates, and may include rotation gates, such as an X-axis rotation gate, a Y-axis rotation gate, and a Z-axis rotation gate. A parameter indicates, for example, the rotation angle of a rotation gate. A quantum state is represented by a combination of values of a plurality of qubits.

A quantum circuit to which parameter values have been assigned transforms an initial value of a quantum state into a desired quantum state. The initial value of the quantum state may be fixedly given or may be specified by a user. Examples of the initial value include a quantum state in which all qubits are |0〉 and a quantum state in which the first half of the qubits are |0〉 and the second half of the qubits are |1〉. A quantum circuit may be represented as a quantum circuit matrix in which operations on a plurality of qubits are expressed in matrix form. A quantum state may be represented as a state vector having a length corresponding to the number of qubits. The elements of the quantum circuit matrix and the state vector are complex numbers. The length of one side of the quantum circuit matrix and the length of the state vector are both 2ⁿ, where n denotes the number of qubits.

The quantum circuits 14a, 14b, and 14c indicated in the database 13 have mutually different structures. The quantum circuits 14a, 14b, and 14c may include different types of quantum gates and may include different numbers of quantum gates. In addition, the quantum circuits 14a, 14b, and 14c may have different connection relationships among a plurality of quantum gates. Also, the quantum circuits 14a, 14b, and 14c may have different parameters.

An optimization method iteratively updates the parameter values assigned. VQE searches for a minimum energy value of an analysis target by an iterative method. To this end, the optimization method searches, through a plurality of iterations, for parameter values that further reduce the energy. The optimization method may include an optimization algorithm and may include a stopping condition. For example, the optimization methods 15a, 15b, and 15c indicated in the database 13 differ from each other in at least one of the optimization algorithm and the stopping condition.

An optimization algorithm selects parameter values to be tried next, based on the calculated energy and the current parameter values. Examples of optimization algorithms include: the Nelder-Mead method; the Powell method; the conjugate gradient (CG) method; the Broyden Fletcher Goldfarb Shannon (BFGS) method; the constrained optimization by linear approximation (COBYLA) method; the bound optimization by quadratic approximation (BOBYQA) method; the sequential least squares programming (SLSQP) method; simulated annealing; a genetic algorithm; a differential evolution algorithm; and a particle swarm optimization algorithm.

A stopping condition is a condition for stopping iterative updating of parameter values. The stopping condition may include that the number of updates has reached an upper limit. The stopping condition may include that the absolute value of the derivative of an objective function, such as an amount of change in energy from a previous iteration, has fallen below a threshold. Further, the stopping condition may include that the VQE execution time has reached an upper time limit.

The database 13 may further associate a plurality of repetition counts with the plurality of quantum circuits. Each record included in the database 13 may further indicate one repetition count in addition to one quantum circuit and one optimization method. The repetition count refers to the number of stages in which the same quantum circuit is repeated in series. Let M denote the number of repetitions for a certain quantum circuit. VQE generates a quantum state by executing the quantum circuit M consecutive times.

The processing unit 12 receives a Hamiltonian 16 corresponding to the current analysis target. The Hamiltonian 16 is an operator for calculating an energy of the analysis target from a quantum state. The Hamiltonian 16 is determined according to the structure of the analysis target. The Hamiltonian 16 may be specified by the user. In the case of quantum chemical calculations for calculating the ground-state energy of a substance, the Hamiltonian 16 is determined from the structure of the substance. In the case where the analysis target is a molecule, a quantum state represents an electronic configuration of the molecule and corresponds to a wave function of the Schrödinger equation or to molecular orbitals.

The Hamiltonian 16 may be represented as a quantum circuit including a plurality of quantum gates. In the first embodiment, the quantum circuits indicated in the database 13 are quantum circuits in a narrow sense. On the other hand, the Hamiltonian 16 or an entire quantum circuit including a quantum circuit in the narrow sense and the Hamiltonian 16 is a quantum circuit in a broad sense. A quantum computer may calculate an energy by sequentially executing a quantum circuit in the narrow sense and the Hamiltonian 16.

Alternatively, the Hamiltonian 16 may be represented as a Hamiltonian matrix in which operations on a plurality of qubits are expressed in matrix form. The length of one side of the Hamiltonian matrix is 2ⁿ, where n denotes the number of qubits. A quantum simulator may calculate an energy by sequentially applying the quantum circuit matrix and the Hamiltonian matrix to an initial value of a state vector.

The processing unit 12 refers to the database 13 and calculates a plurality of energies including energies 17a, 17b, and 17c corresponding to a plurality of quantum circuits including the quantum circuits 14a, 14b, and 14c. The processing unit 12 may use the quantum computer or the quantum simulator to calculate the energies 17a, 17b, and 17c.

At this time, the processing unit 12 combines each of the quantum circuits 14a, 14b, and 14c with the Hamiltonian 16. The processing unit 12 applies the Hamiltonian 16 to a quantum state generated by the quantum circuit 14a to calculate the energy 17a. Similarity, the processing unit 12 applies the Hamiltonian 16 to a quantum state generated by the quantum circuit 14b to calculate the energy 17b. In addition, the processing unit 12 applies the Hamiltonian 16 to a quantum state generated by the quantum circuit 14c to calculates the energy 17c.

Each energy 17a, 17b, and 17c may be a pre-optimization energy calculated without updating the parameter values. The pre-optimization energies may be referred to as intermediate energies. In order to calculate the energies 17a, 17b, and 17c, the processing unit 12 may execute each of the quantum circuits 14a, 14b, and 14c only once. Therefore, the processing unit 12 does not need to execute the optimization methods 15a, 15b, and 15c.

The parameter values assigned to the quantum circuits 14a, 14b, and 14c may be fixed initial values, may be specified by the user, or may be parameter values stored in the database 13. For example, the database 13 may store the parameter values in association with the quantum circuits 14a, 14b, and 14c. The stored parameter values may be optimal values that yielded the minimum energy in the past VQE executions.

In the case where the database 13 includes a repetition count, the processing unit 12 may generate a quantum state by repeating a corresponding quantum circuit a number of times specified by the repetition count. Note that the same parameter values may be assigned to the repeated quantum circuits.

The processing unit 12 determines a quantum circuit 14d and an optimization method 15d to be used for the current analysis target, based on the plurality of calculated energies and the database 13. For example, from among the plurality of quantum circuits indicated in the database 13, the processing unit 12 uses, as the quantum circuit 14d, a quantum circuit that has yielded the minimum energy by the above-described method. In addition, from among the plurality of optimization methods indicated in the database 13, the processing unit 12 uses, as the optimization method 15d, the optimization method corresponding to the quantum circuit that has yielded the minimum energy. In this connection, the processing unit 12 may generate the quantum circuit 14d by modifying the quantum circuit that has yielded the minimum energy.

The processing unit 12 calculates an energy 18 of the analysis target based on the quantum circuit 14d, the Hamiltonian 16, and the optimization method 15d. The energy 18 is a post-optimization energy calculated by iteratively updating parameter values assigned to the quantum circuit 14d according to the optimization method 15d. The energy 18 may be an estimated value of the minimum energy or an estimated value of the ground-state energy of the molecule. The processing unit 12 may use the quantum computer or the quantum simulator to calculate the energy 18.

For example, the processing unit 12 initializes the parameters of the quantum circuit 14d. The processing unit 12 generates a quantum state using the quantum circuit 14d, and applies the Hamiltonian 16 to the quantum state to calculates an intermediate energy. The processing unit 12 updates the parameter values of the quantum circuit 14d on the basis of the current parameter values and the calculated intermediate energy according to the optimization algorithm indicated by the optimization method 15d. The processing unit 12 iteratively performs the updating of the parameter values, the generation of a quantum state, and the calculation of an intermediate energy until the stopping condition indicated by the optimization method 15d is satisfied.

The processing unit 12 may output the determined quantum circuit 14d and optimization method 15d. The processing unit 12 may store the quantum circuit 14d and the optimization method 15d in a non-volatile storage, may display the quantum circuit 14d and the optimization method 15d on a display device, or may notify another information processing apparatus of the quantum circuit 14d and the optimization method 15d. The processing unit 12 may register the quantum circuit 14d and the optimization method 15d in the database 13. The processing unit 12 may notify another information processing apparatus of the quantum circuit 14d and the optimization method 15d to cause the information processing apparatus to calculate the energy 18.

The processing unit 12 may output the calculated energy 18. The processing unit 12 may store the energy 18 in a non-volatile storage, may display the energy 18 on a display device, or may notify another information processing apparatus of the energy 18.

As described above, the information processing apparatus 10 according to the first embodiment receives the Hamiltonian 16 for calculating the energy of an analysis target from a quantum state. The information processing apparatus 10 refers to the database 13, and calculates the energies 17a, 17b, and 17c corresponding to the quantum circuits 14a, 14b, and 14c by combining each quantum circuit 14a, 14b, and 14c with the Hamiltonian 16. The database 13 associates the quantum circuits 14a, 14b, and 14c that generate quantum states corresponding to assigned parameter values, with the optimization methods 15a, 15b, and 15c that iteratively update the parameter values.

The information processing apparatus 10 determines the quantum circuit 14d and the optimization method 15d to be used for the analysis target, based on the energies 17a, 17b, and 17c and the database 13. The information processing apparatus 10 calculates the energy 18 of the analysis target, based on the quantum circuit 14d, the Hamiltonian 16, and the optimization method 15d.

As described above, the information processing apparatus 10 is able to execute a VQE, using an appropriate quantum circuit and an appropriate optimization method for the analysis target. Thus, the user does not need to perform trial and error to select a quantum circuit and an optimization method. In addition, the information processing apparatus 10 is able to accelerate the energy convergence and shorten the VQE execution time. In addition, the information processing apparatus 10 is able to calculate the energy with high accuracy. Thus, the information processing apparatus 10 is able to efficiently execute a VQE.

### (b) Second Embodiment

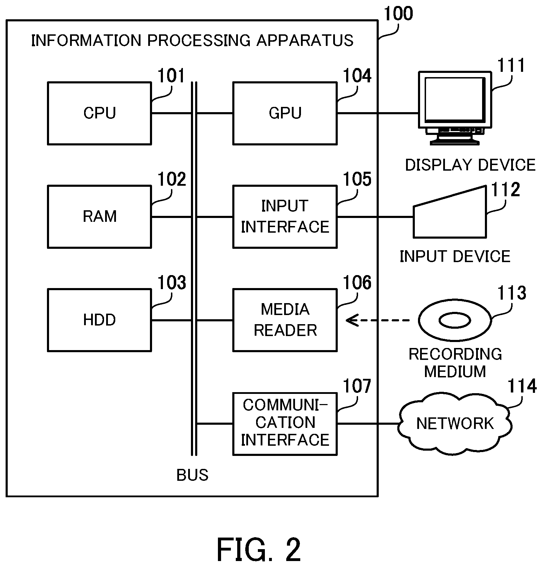

FIG. 2 illustrates an example of hardware of an information processing apparatus according to a second embodiment. An information processing apparatus 100 according to the second embodiment is a von Neumann classical computer. The information processing apparatus 100 performs quantum chemical calculations for calculating the ground-state energy of a molecule, using VQE. The information processing apparatus 100 uses a quantum simulator, which simulates quantum operations performed by a quantum computer on a classical computer. Alternatively, the information processing apparatus 100 may use a quantum computer instead of the quantum simulator. The information processing apparatus 100 corresponds to the information processing apparatus 10 of the first embodiment.

The information processing apparatus 100 includes a CPU 101, a RAM 102, an HDD 103, a GPU 104, an input interface 105, a media reader 106, and a communication interface 107. The CPU 101 corresponds to the processing unit 12 of the first embodiment. The RAM 102 or the HDD 103 corresponds to the storage unit 11 of the first embodiment.

The CPU 101 is a processor that executes program instructions. The CPU 101 loads a program and data from the HDD 103 into the RAM 102 and executes the program. The information processing apparatus 100 may include a plurality of processors.

The RAM 102 is a volatile semiconductor memory that temporarily stores a program executed by the CPU 101 and data used by the CPU 101 during its operation. The information processing apparatus 100 may include a volatile memory of a type other than RAM.

The HDD 103 is a non-volatile storage that stores software programs such as an operating system, middleware, and application software, and data. The information processing apparatus 100 may include another type of non-volatile storage such as an SSD or a flash memory.

The GPU 104 performs image processing in cooperation with the CPU 101, and outputs images to a display device 111 connected to the information processing apparatus 100. The display device 111 is, for example, a cathode ray tube (CRT) display, a liquid crystal display, an organic electro luminescence (EL) display, or a projector.

The GPU 104 may be used as a general purpose computing on graphics processing unit (GPGPU). The GPU 104 may execute programs in accordance with instructions from the CPU 101. The information processing apparatus 100 may include a volatile semiconductor memory other than the RAM 102 as a GPU memory.

The input interface 105 receives an input signal from an input device 112 connected to the information processing apparatus 100. The input device 112 is, for example, a mouse, a touch panel, or a keyboard. A plurality of input devices may be connected to the information processing apparatus 100.

The media reader 106 is a reading device that reads a program and data from a recording medium 113. The recording medium 113 is, for example, a magnetic disk, an optical disc, or a semiconductor memory. Magnetic disks include a flexible disk (FD) and an HDD. Optical discs include a compact disc (CD) and a digital versatile disc (DVD). The media reader 106 copies the program and data read from the recording medium 113 to another recording medium such as the RAM 102 or the HDD 103. The read program may be executed by the CPU 101.

The recording medium 113 may be a portable recording medium. The recording medium 113 may be used for distribution of programs and data. The recording medium 113 and the HDD 103 may be referred to as computer-readable storage media.

The communication interface 107 communicates with other information processing apparatuses via a network 114. The communication interface 107 may be a wired communication interface connected to a wired communication device such as a switch or a router, or may be a wireless communication interface connected to a wireless communication device such as a base station or an access point.

In the case where a quantum computer is used for VQE, the information processing apparatus 100 includes an interface connected to the quantum computer. The quantum computer includes a qubit unit and a control unit. The qubit unit includes a plurality of qubits. For example, the qubit unit performs quantum operations corresponding to quantum gates by applying microwave pulse signals to the qubits, thereby transforming a quantum state represented by the values of the qubits.

The control unit receives commands from the information processing apparatus 100. The control unit instructs the qubit unit to execute the quantum gates in response to the instructions from the information processing apparatus 100. In addition, the control unit measures the values of the qubits according to instructions from the information processing apparatus 100 and transmits the measurement result to the information processing apparatus 100. Next, VQE will be described.

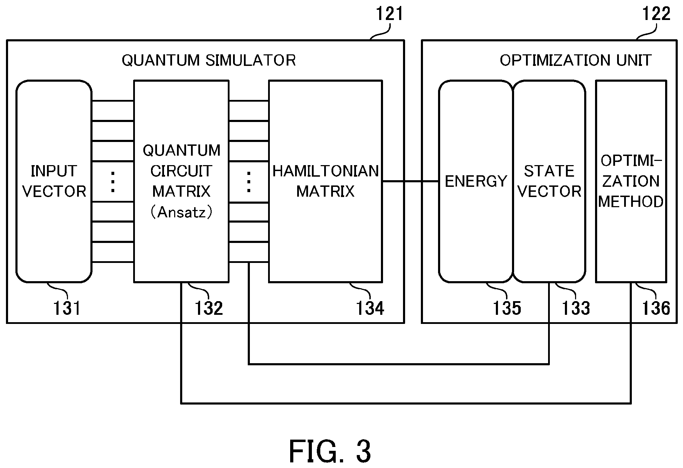

FIG. 3 illustrates an example of a configuration of a variational quantum eigensolver. The information processing apparatus 100 includes a quantum simulator 121 and an optimization unit 122. Each of the quantum simulator 121 and the optimization unit 122 is software executed by the information processing apparatus 100. The quantum simulator 121 receives an input vector 131, a quantum circuit matrix 132, and a Hamiltonian matrix 134. The optimization unit 122 receives an optimization method 136.

The input vector 131 is a vector indicating an initial value of a quantum state. A quantum state is represented as a complex vector whose elements are complex numbers. The input vector 131 has 2ⁿ dimensions, where n denotes the number of qubits. The input vector 131 is given by a user according to a molecule serving as an analysis target. The input vector 131 may represent a quantum state in which all qubits are |0〉, or may represent a quantum state in which all qubits are 11). Alternatively, the input vector 131 may represent a quantum state formed as a combination of |0〉 and |1〉, such as the first half of the qubits being |0〉 and the second half being |1〉.

The quantum circuit matrix 132 is a matrix representing a quantum circuit that transforms the input vector 131 into a state vector 133. A quantum circuit is represented as a complex matrix whose elements are complex numbers. The quantum circuit matrix 132 represents an overall operation on a plurality of qubits. The quantum circuit matrix 132 is a 2ⁿ × 2ⁿ unitary matrix, where n denotes the number of qubits. The quantum circuit represented by the quantum circuit matrix 132 includes a plurality of quantum gates. The quantum circuit matrix 132 may be decomposed into a product of a plurality of quantum gate matrices representing the operations of the plurality of quantum gates. The quantum circuit matrix 132 may represent a quantum circuit having a structure in which the same basic quantum circuit is repeated in series. In this case, the quantum circuit matrix of the basic quantum circuit and the number of repetitions may be specified.

The quantum circuit matrix 132 includes one or more parameters. The quantum circuit represented by the quantum circuit matrix 132 may be referred to as an Ansatz circuit. Typically, each parameter represents a rotation angle of a rotation gate, such as an X-axis rotation gate, a Y-axis rotation gate, and a Z-axis rotation gate. By assigning real-valued parameter values to the parameters, the quantum circuit matrix 132 represents specific operations on the input vector 131.

The quantum simulator 121 generates the state vector 133 by multiplying the input vector 131 by the quantum circuit matrix 132 in which the parameter values have been assigned. The state vector 133 represents a trial quantum state. The state vector 133 has 2ⁿ dimensions, where n denotes the number of qubits. The state vector 133 represents the electronic configuration of the molecule and corresponds to the wave function of the Schrödinger equation or molecular orbitals.

The Hamiltonian matrix 134 is a matrix representing a Hamiltonian. A Hamiltonian is an operator for calculating the energy of a molecule from a quantum state. The Hamiltonian is represented as a complex matrix whose elements are complex numbers. The Hamiltonian matrix 134 is a 2ⁿ × 2ⁿ Hermitian matrix, where n denotes the number of qubits. A Hamiltonian is determined from the structure of a molecule. The Hamiltonian matrix 134 is provided by the user according to the molecule serving as an analysis target.

Similarly to the quantum circuit matrix 132, the Hamiltonian matrix 134 may be represented in a form of a quantum circuit including a plurality of quantum gates. The Hamiltonian matrix 134 may be decomposed into a product of a plurality of quantum gate matrices representing the operations of the plurality of quantum gates. In the second embodiment, the term "quantum circuit" in a narrow sense refers to the quantum circuit represented by the quantum circuit matrix 132. However, in a broad sense, the term "quantum circuit" may include the quantum circuit represented by the Hamiltonian matrix 134 or an entire quantum circuit represented by the quantum circuit matrix 132 and the Hamiltonian matrix 134. The quantum simulator 121 applies the Hamiltonian matrix 134 to the state vector 133.

The optimization unit 122 acquires the state vector 133. The state vector 133 represents a quantum state obtained after the application of the quantum circuit matrix 132 and before the application of the Hamiltonian matrix 134. The optimization unit 122 may read the state vector 133 directly from the quantum simulator 121. Alternatively, the optimization unit 122 may acquire the state vector 133 by causing the quantum simulator 121 to measure the values of a plurality of qubits. In the case where the quantum simulator 121 implements probabilistic measurement, the optimization unit 122 may cause the quantum simulator 121 to measure an output of the quantum circuit matrix 132 a plurality of times and may calculate an expected value of the measurement results as the state vector 133.

The optimization unit 122 also acquires an energy 135. The energy 135 is a real number indicating the energy of the molecule in the case where the molecule has the electronic configuration represented by the state vector 133. The optimization unit 122 may be able to read the energy 135 directly from the quantum simulator 121. Alternatively, the optimization unit 122 may acquire the energy 135 by causing the quantum simulator 121 to measure values of a plurality of qubits after the application of the Hamiltonian matrix 134. In the case where the quantum simulator 121 implement probabilistic measurement, the optimization unit 122 may cause the quantum simulator 121 to measure an output of the Hamiltonian matrix 134 a plurality of times and may calculate an expected value of the measurement results as the energy 135.

The optimization unit 122 repeats iterations of acquiring the state vector 133 and the energy 135 while updating parameter values assigned to the quantum circuit matrix 132. The optimization method 136 includes an optimization algorithm and a stopping condition. The optimization algorithm is a search algorithm that determines parameter values to be tried next from the current parameter values so that the energy 135 becomes smaller. The stopping condition is a condition for stopping the iterations.

The optimization unit 122 determines whether the stopping condition is satisfied. If the stopping condition is satisfied, the optimization unit 122 outputs the last acquired state vector 133 and energy 135 as an execution result of the VQE. The last acquired energy 135 is an estimated value of the ground-state energy of the molecule. If the stopping condition is not satisfied, the optimization unit 122 selects parameter values to be tried next according to the optimization algorithm. The optimization unit 122 assigns the selected parameter values to the quantum circuit matrix 132, and causes the quantum simulator 121 to execute calculation again using the quantum circuit matrix 132 and the Hamiltonian matrix 134.

Note that there are a plurality of types of quantum circuit matrices 132, and there are a plurality of types of optimization methods 136. An appropriate quantum circuit matrix 132 and an appropriate optimization method 136 depend on the molecule serving as an analysis target. As such, the user may select the quantum circuit matrix 132 and the optimization method 136 by trial and error. The use of an inappropriate quantum circuit matrix 132 or an inappropriate optimization method 136 may slow the convergence of the energy 135, thereby increasing the VQE execution time. To avoid this, the information processing apparatus 100 automatically selects a quantum circuit matrix 132 and an optimization method 136 suitable for the molecule serving as an analysis target, with reference to a history database indicating past VQE execution results.

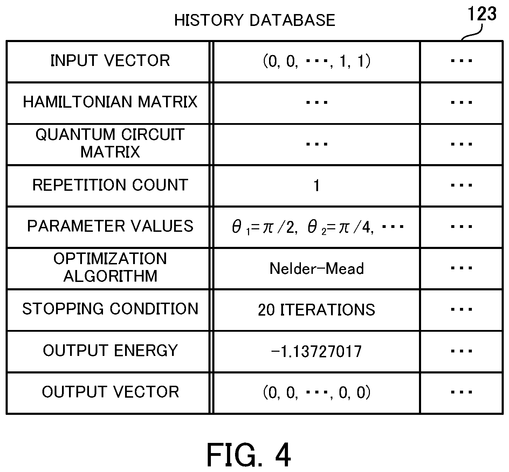

FIG. 4 illustrates an example of a structure of the history database. The information processing apparatus 100 includes a history database 123. The history database 123 includes a plurality of records each indicating a past VQE execution. Each of the plurality of records includes an input vector, a Hamiltonian matrix, a quantum circuit matrix, a repetition count, parameter values, an optimization algorithm, a stopping condition, an output energy, and an output vector.

The input vector is an initial vector input to the quantum circuit matrix, and is specified by a user in a past VQE execution. The Hamiltonian matrix is a matrix that represents the Hamiltonian of a molecule, and is specified by the user in the past VQE execution. The quantum circuit matrix is a matrix used to transform the input vector into a desired state vector in the past VQE execution. The quantum circuit matrix includes one or more parameters. The quantum circuit matrix registered in the history database 123 is a basic quantum circuit matrix including no repetition.

The repetition count indicates the number of stages where the same quantum circuit matrix is repeated in series in the past VQE execution. The parameter values are values assigned to the parameters included in the quantum circuit matrix. The parameter values registered in the history database 123 are final parameter values that have yielded the ground-state energy in the past VQE execution.

The optimization algorithm is a search algorithm that optimizes the parameter values. Examples of the optimization algorithm include the Nelder-Mead method, the Powell method, the conjugate gradient method, the BFGS method, the COBYLA method, the BOBYQA method, the SLSQP method, simulated annealing, a genetic algorithm, a differential evolution algorithm, and a particle swarm optimization algorithm.

The stopping condition is a condition for stopping the iterations for updating the parameter values. The stopping condition may include that the number of iterations has reached a threshold. Further, the stopping condition may include that an amount of change in the value of an objective function has decreased below a threshold, or that the absolute value of the derivative of the objective function has decreased below a threshold. The value of the objective function may be a calculated energy. Further, the objective function may include a penalty term for preventing the state vector from becoming excessively complex. Further, the stopping condition may include that the VQE execution time has exceeded a threshold.

The output energy is a final energy output as the ground-state energy of the molecule in the past VQE execution. The output vector is a state vector corresponding to the output energy, and is a final state vector that has yielded the ground-state energy in the past VQE execution. The quantum circuit matrix, the repetition count, and the parameter values stored in the history database 123 are information on the quantum circuit matrix 132. The optimization algorithm and the stopping condition stored in the history database 123 are information on the optimization method 136.

The information processing apparatus 100 determines, with reference to the history database 123, a quantum circuit matrix, an iteration count, an optimization algorithm, and a stopping condition suitable for the current VQE execution. First, the information processing apparatus 100 receives an input vector and a Hamiltonian matrix to be used in the current VQE execution. The information processing apparatus 100 reads, from the history database 123, a set of a quantum circuit matrix, a repetition count, and parameter values.

The information processing apparatus 100 defines a product in which the quantum circuit matrix is repeated in series a number of times specified by the repetition count, and assigns the parameter values to the parameters of the quantum circuit matrix, thereby generating an executable quantum circuit matrix. Using the quantum simulator 121, the information processing apparatus 100 generates an intermediate vector by inputting the current input vector to the executable quantum circuit matrix, and calculates an intermediate energy by inputting the intermediate vector to the current Hamiltonian matrix.

The intermediate energy is a pre-optimization energy. The information processing apparatus 100 does not need to execute the optimization algorithm or to update the parameter values. Therefore, the information processing apparatus 100 only needs to calculate the intermediate energy once for each set of a quantum circuit matrix and a repetition count registered in the history database 123. In this way, the information processing apparatus 100 calculates an intermediate energy for each set of the quantum circuit matrix and the repetition number.

In the second embodiment, the information processing apparatus 100 selects a set of a quantum circuit matrix and a repetition count that has yielded the minimum intermediate energy. Further, the information processing apparatus 100 selects the optimization algorithm and the stopping condition included in the same record as the selected set. The information processing apparatus 100 uses the selected quantum circuit matrix, repetition count, optimization algorithm, and stopping condition for the current VQE execution. In this connection, in the current VQE execution, the information processing apparatus 100 may use parameter values registered in the history database 123 or fixed initial values, as the initial values of the parameters included in the selected quantum circuit matrix.

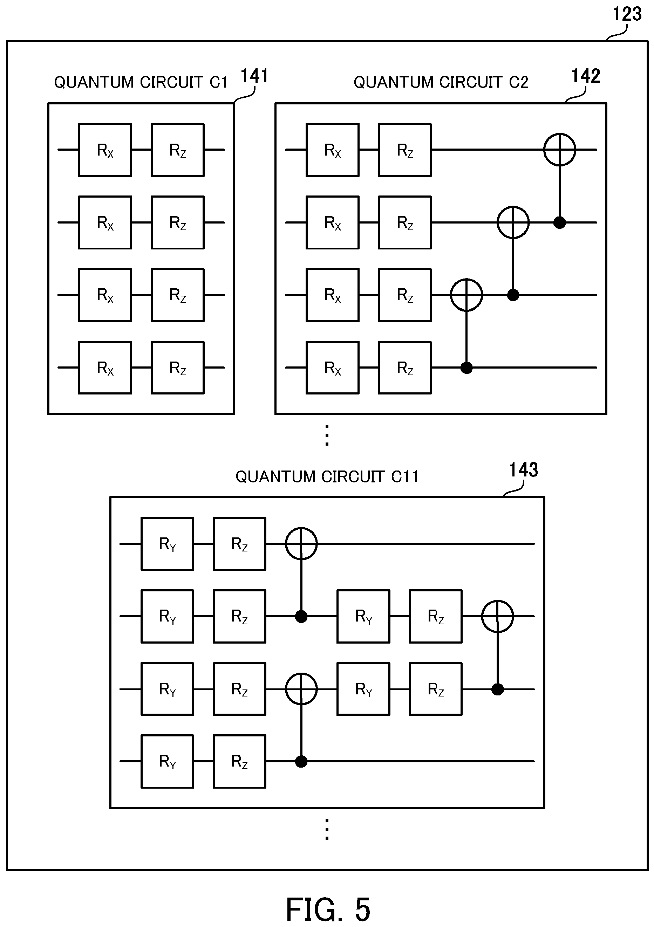

FIG. 5 illustrates examples of quantum circuits stored in the history database. A plurality of quantum circuits including quantum circuits 141, 142, and 143 are registered in the history database 123. Quantum circuits that are usable in VQE are also described in the following Non-Patent Literature: Sukin Sim, Peter D. Johnson, and Alan Asparu-Guzik, "Expressibility and Entangling Capability of Parameterized Quantum Circuits for Hybrid Quantum-Classical Algorithms", Advanced Quantum Technologies: Volume 2, Issue 12, December 2019.

Each quantum circuit includes quantum gates such as an X-axis rotation gate, a Y-axis rotation gate, a Z-axis rotation gate, and a CNOT gate. The X-axis rotation gate rotates a quantum state about the X-axis by a specified angle. The Y-axis rotation gate rotates a quantum state about the Y-axis by a specified angle. The Z-axis rotation gate rotates a quantum state about the Z-axis by a specified angle. The X-axis rotation gate, the Y-axis rotation gate, and the Z-axis rotation gate may each have a parameter indicating a rotation angle.

Equation (1) represents a matrix representation of an X-axis rotation gate having an angle θ as a parameter. Equation (2) represents a matrix representation of a Y-axis rotation gate having an angle θ as a parameter. Equation (3) represents a matrix representation of a Z-axis rotation gate having an angle θ as a parameter. The quantum circuits may vary in the number and types of quantum gates. The quantum circuits may also vary in the connection relationships among the plurality of quantum gates. ${R}_{X} \left(θ\right) = \left[\begin{matrix}cos \left(θ/2\right) & - i sin \left(θ/2\right) \\ - i sin \left(θ/2\right) & cos \left(θ/2\right)\end{matrix}\right]$ (1) ${R}_{Y} \left(θ\right) = \left[\begin{matrix}cos \left(θ/2\right) & - sin \left(θ/2\right) \\ sin \left(θ/2\right) & cos \left(θ/2\right)\end{matrix}\right]$ (2) ${R}_{Z} \left(θ\right) = \left[\begin{matrix}exp \left(-iθ/2\right) & 0 \\ 0 & exp \left(iθ/2\right)\end{matrix}\right]$ (3)

Each quantum circuit 141, 142, and 143 acts on four qubits. The quantum circuit 141 includes four parameterized X-axis rotation gates and four parameterized Z-axis rotation gates. The quantum circuit 141 has eight parameters. The quantum circuit 142 includes four parameterized X-axis rotation gates, four parameterized Z-axis rotation gates, and three CNOT gates. The quantum circuit 142 has eight parameters. The quantum circuit 143 includes six parameterized Y-axis rotation gates, six parameterized Z-axis rotation gates, and three CNOT gates. The quantum circuit 143 has 12 parameters.

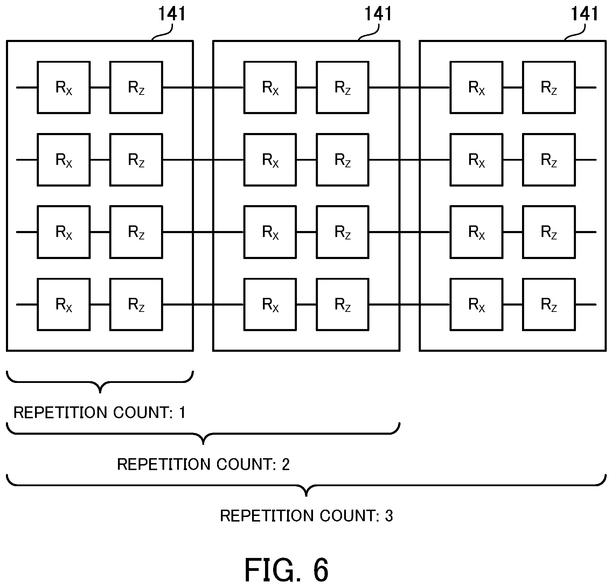

FIG. 6 illustrates examples of the repetition count for a quantum circuit. Here, the quantum circuit 141 is used as an example of a parameterized quantum circuit. In the case where the repetition count is one, the information processing apparatus 100 uses the quantum circuit 141 as it is. In the case where the repetition count is two, the information processing apparatus 100 connects another quantum circuit 141 to the subsequent stage of the first quantum circuit 141. This results in generating a state vector different from that obtained in the case where the repetition count is one. In the case where the repetition count is three, one more quantum circuit 141 is added compared to the case where the repetition count is two. This results in generating a state vector different from those obtained in the case where the repetition count is one or two.

As described above, the quantum circuit 141 has eight parameters. Even repeating the quantum circuit 141 does not increase the number of parameters. Therefore, the same parameter values are assigned to the first quantum circuit 141, the second quantum circuit 141, and the third quantum circuit 141. However, the information processing apparatus 100 may assign different parameter values to the first quantum circuit 141, the second quantum circuit 141, and the third quantum circuit 141.

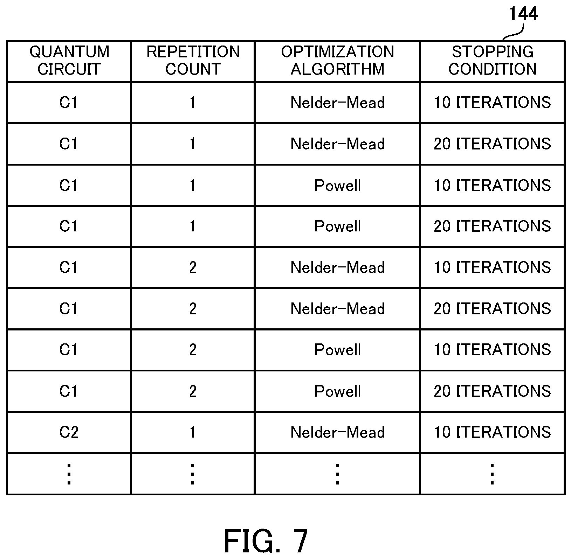

FIG. 7 illustrates examples of a combination of a quantum circuit, a repetition count, and an optimization method. A table 144 includes a plurality of records. Each record indicates a combination of a quantum circuit, a repetition count, an optimization algorithm, and a stopping condition.

For example, one record indicates a combination in which the quantum circuit is the quantum circuit 141, the repetition count is one, the optimization algorithm is the Nelder-Mead method, and the stopping condition is ten iterations. Another record indicates a combination in which the quantum circuit is the quantum circuit 141, the repetition count is two, the optimization algorithm is the Powell method, and the stopping condition is 20 iterations.

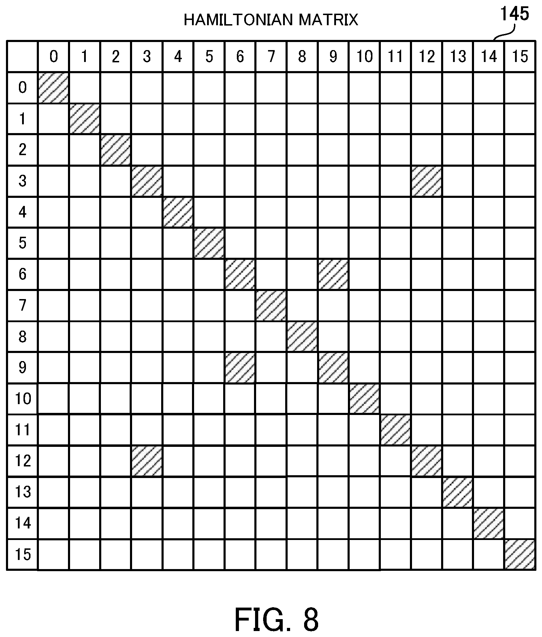

FIG. 8 illustrates an example of a structure of a Hamiltonian matrix. A Hamiltonian matrix 145 represents a Hamiltonian of a hydrogen molecule. The Hamiltonian matrix 145 is a Hermitian matrix that acts on four qubits, and has a size of 16 × 16. FIG. 8 illustrates the positions of non-zero elements among 256 elements included in the Hamiltonian matrix 145. The Hamiltonian matrix 145 includes 20 non-zero elements and 236 zero elements.

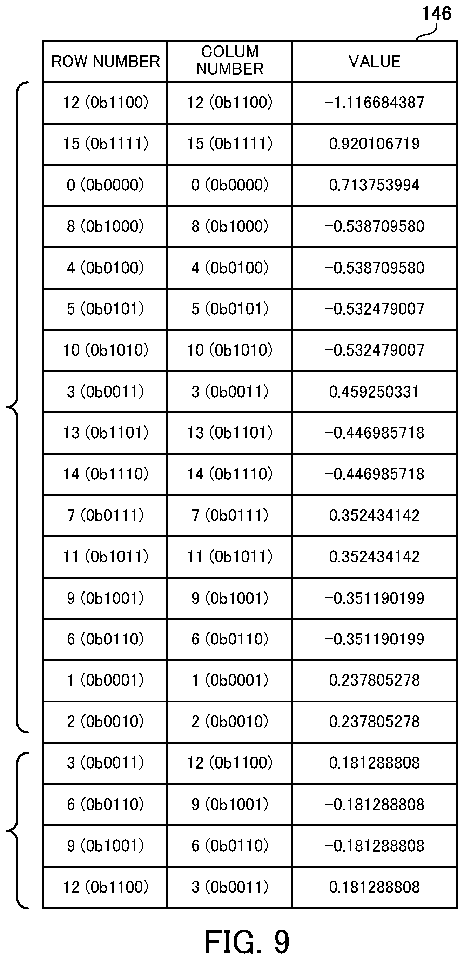

FIG. 9 illustrates an example of non-zero elements included in a Hamiltonian matrix. A table 146 contains 20 non-zero elements included in the Hamiltonian matrix 145. In FIG. 9, the 20 non-zero elements are sorted in descending order of absolute value. Among the 20 elements, the top 16 elements are diagonal elements, and the remaining 4 elements are off-diagonal elements. In this way, the absolute values of the diagonal elements are relatively large, and the absolute values of the off-diagonal elements are relatively small.

The table 146 associates a row number, a column number, and a value with each other. In the table 146, the row numbers and the column numbers are expressed in both decimal notation and binary notation. The positions of the four off-diagonal elements are [3, 12], [6, 9], [9, 6], and [12, 3].

The information processing apparatus 100 calculates an energy from a state vector and a Hamiltonian matrix. An energy E is calculated as expressed in Equation (4), where N denotes the length of the state vector, S_{Re} denotes the real part of the state vector, S_{Im} denotes the imaginary part of the state vector, and H denotes the Hamiltonian matrix. $E = {\sum }_{j = 1}^{N} {\sum }_{k = 1}^{N} \left({S}_{Re}\left(j\right)-i\times {S}_{Im}\left(j\right)\right) \times H \left(j, k\right) \times \left({S}_{Re}\left(k\right)+i\times {S}_{Im}\left(k\right)\right)$ (4)

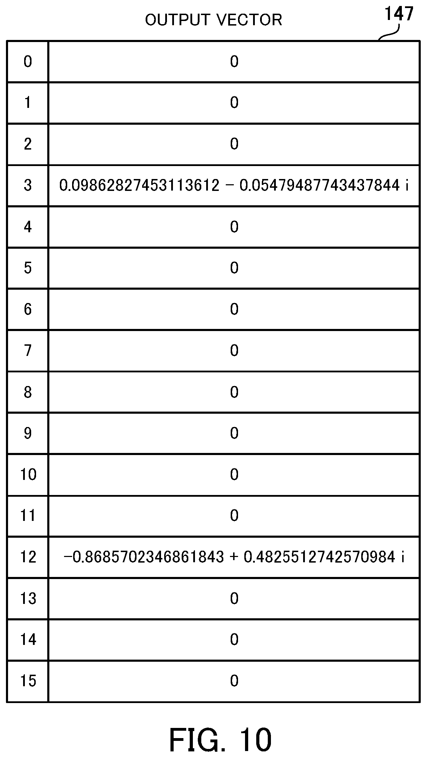

FIG. 10 illustrates an example of an output vector. An output vector 147 is an output vector corresponding to an output energy calculated using the Hamiltonian matrix 145, and corresponds to an electronic configuration of a hydrogen molecule at the ground-state energy. The output vector 147 has a length of 16. The output vector 147 includes two non-zero elements and fourteen zero elements. Among the 16 dimensions, the fourth and thirteenth dimensions have non-zero complex numbers. The following describes functions and processing procedures of the information processing apparatus 100.

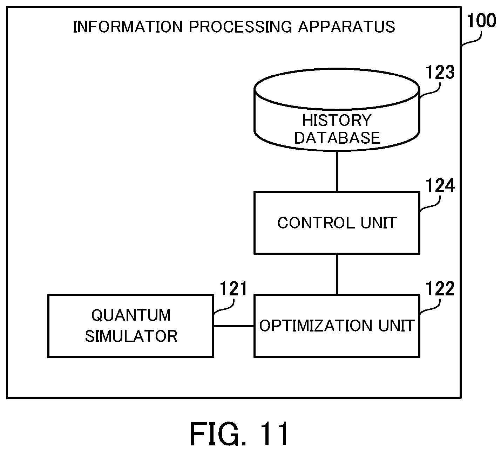

FIG. 11 is a block diagram illustrating an example of functions of the information processing apparatus. The information processing apparatus 100 includes the quantum simulator 121, the optimization unit 122, the history database 123, and a control unit 124. The history database 123 is implemented using, for example, the RAM 102 or the HDD 103. The quantum simulator 121, the optimization unit 122, and the control unit 124 are implemented using, for example, the CPU 101 and a program.

The quantum simulator 121 simulates quantum computation performed by a quantum computer. However, the information processing apparatus 100 may use a quantum computer connected to the information processing apparatus 100 instead of the quantum simulator 121.

The optimization unit 122 receives an input vector, a quantum circuit matrix, a Hamiltonian matrix, and an optimization method to be used in the current VQE execution. The optimization unit 122 assigns parameter values to parameters, and calculates an intermediate vector and an intermediate energy using the quantum simulator 121. Depending on the specified optimization method, the optimization unit 122 may iteratively calculate the intermediate vector and the intermediate energy while updating the parameter values.

The history database 123 includes past VQE execution results. The history database 123 associates an input vector, a Hamiltonian matrix, a quantum circuit matrix, an optimization method, an output energy, and an output vector with each other.

The control unit 124 controls the VQE. The control unit 124 receives an input vector and a Hamiltonian matrix from the user. For each of a plurality of quantum circuit matrices stored in the history database 123, the control unit 124 causes the optimization unit 122 to calculate an intermediate energy. At this time, the control unit 124 specifies the current input vector, the corresponding quantum circuit matrix stored in the history database 123, and the current Hamiltonian matrix. In addition, the control unit 124 specifies that the intermediate energy needs to be calculated only once without updating parameter values.

The control unit 124 determines a quantum circuit matrix and an optimization method to be used in the current VQE execution, based on the plurality of intermediate energies corresponding to the plurality of quantum circuit matrices. In the second embodiment, the determined quantum circuit matrix is one of the quantum circuit matrices stored in the history database 123, and the determined optimization method is one of the optimization methods stored in the history database 123. The control unit 124 notifies the optimization unit 122 of the input vector, the quantum circuit matrix, the Hamiltonian matrix, and the optimization method, and causes the optimization unit 122 to calculate an output vector and an output energy.

The control unit 124 may output the determined quantum circuit matrix and the determined optimization method. The control unit 124 may store the quantum circuit matrix and the optimization method in a non-volatile storage, may display the quantum circuit matrix and the optimization method on the display device 111, or may transmit the quantum circuit matrix and the optimization method to another information processing apparatus. In addition, the control unit 124 may output the calculated output vector and output energy. The control unit 124 may store the output vector and the output energy in a non-volatile storage, may display the output vector and the output energy on the display device 111, or may transmit the output vector and the output energy to another information processing apparatus.

Furthermore, the control unit 124 may store the current VQE execution result in the history database 123. The execution result includes, for example, the input vector received from the user, the Hamiltonian matrix received from the user, the determined quantum circuit matrix, the final parameter values, the determined optimization method, the calculated output energy, and the calculated output vector.

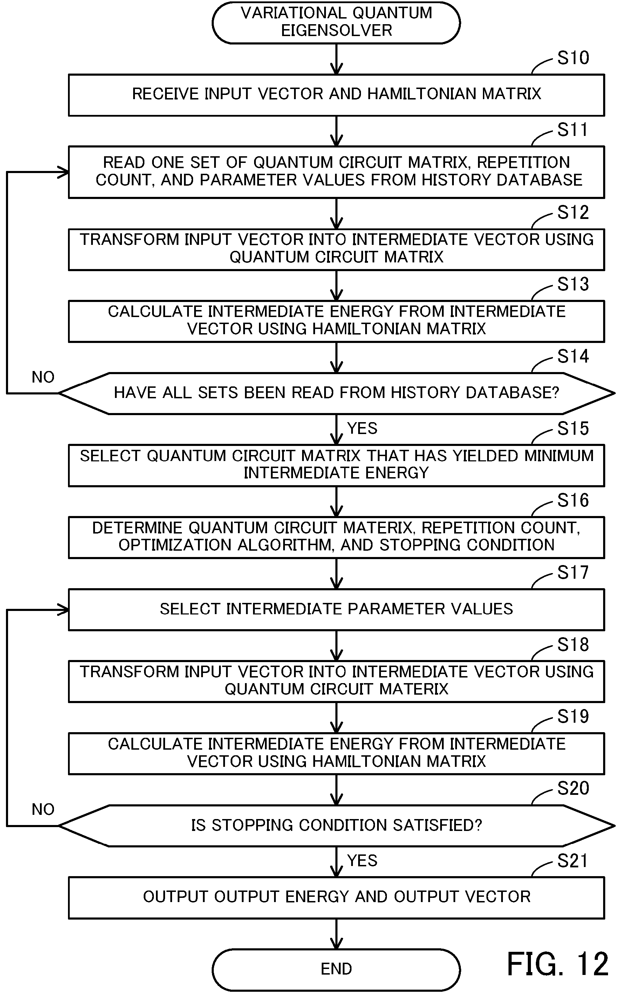

FIG. 12 is a flowchart illustrating an example procedure of a variational quantum eigensolver. In step S10, the control unit 124 receives an input vector and a Hamiltonian matrix. In step S11, the control unit 124 reads one set of a quantum circuit matrix, a repetition count, and parameter values from the history database 123.

In step S12, the optimization unit 122 repeats the read quantum circuit matrix in series a number of times specified by the repetition count, and assigns the read parameter values to the parameters included in the quantum circuit matrix. The optimization unit 122 transforms the input vector into an intermediate vector using the quantum simulator 121 and the quantum circuit matrix to which the parameter values have been assigned. In step S13, the optimization unit 122 calculates an intermediate energy from the intermediate vector using the quantum simulator 121 and the Hamiltonian matrix.

In step S14, the control unit 124 determines whether all sets have been read from the history database 123. If all the sets have been read, the process proceeds to step S15. If there is any set that has not been read, the process returns to step S11.

In step S15, the control unit 124 selects a quantum circuit matrix that has yielded the minimum intermediate energy calculated in step S13, from the plurality of quantum circuit matrices stored in the history database 123. In step S16, the control unit 124 determines a quantum circuit matrix to be used, a repetition count to be used, an optimization algorithm to be used, and a stopping condition to be used. In the second embodiment, the quantum circuit matrix to be used is the quantum circuit matrix selected in step S15. The repetition count to be used, the optimization algorithm to be used, and the stopping condition to be used are those associated with the selected quantum circuit matrix.

In step S17, the optimization unit 122 selects intermediate parameter values to be assigned to the parameters. The intermediate parameter values selected in the first iteration may be fixed initial values or parameter values stored in the history database 123. In the second and subsequent iterations, the optimization unit 122 selects next intermediate parameter values on the basis of the immediately preceding intermediate parameter values and the immediately preceding intermediate energy according to the optimization algorithm.

In step S18, the optimization unit 122 repeats the quantum circuit matrix in series a number of times specified by the repetition count, and assigns the intermediate parameter values to the parameters. The optimization unit 122 transforms the input vector into an intermediate vector using the quantum simulator 121 and the quantum circuit matrix to which the intermediate parameter values have been assigned. In step S19, the optimization unit 122 calculates an intermediate energy from the intermediate vector using the quantum simulator 121 and the Hamiltonian matrix.

In step S20, the optimization unit 122 determines whether the stopping condition is satisfied. For example, the optimization unit 122 determines whether the number of iterations has reached a threshold. For example, the optimization unit 122 calculates the value of an objective function and determines whether the absolute value of the derivative of the objective function falls below a threshold. For example, the optimization unit 122 determines whether the total execution time of steps S17 to S20 exceeds a threshold. If the stopping condition is satisfied, the process proceeds to step S21. If the stopping condition is not satisfied, the process returns to step S17.

In step S21, the control unit 124 outputs, as an output energy, the intermediate energy calculated immediately before the termination. In the quantum chemical calculation, the output energy may represent the ground-state energy of a molecule serving as an analysis target. The control unit 124 also outputs, as an output vector, the intermediate vector calculated immediately before the termination. In the quantum chemical calculation, the output vector may represent an electronic configuration of the molecule having the ground-state energy.

As described above, the information processing apparatus 100 according to the second embodiment performs the quantum chemical calculations for calculating the ground-state energy of a substance using VQE. The information processing apparatus 100 executes the VQE using a quantum computer or a quantum simulator. Thus, the ground-state energy is calculated with high accuracy and efficiency.

In addition, the information processing apparatus 100 manages the history database 123 indicating past VQE executions. The information processing apparatus 100 selects, with reference to the history database 123, an appropriate quantum circuit matrix, an appropriate repetition count, an appropriate optimization algorithm, and an appropriate stopping condition according to a substance serving as an analysis target. Thus, the user does not need to perform trial and error to select a quantum circuit matrix, a repetition count, an optimization algorithm, and a stopping condition. In addition, by using an appropriate quantum circuit matrix, an appropriate repetition count, an appropriate optimization algorithm, and an appropriate stopping condition, the information processing apparatus 100 is able to accelerate the energy convergence and shorten the VQE execution time.

Further, the information processing apparatus 100 calculates an intermediate energy for each of the plurality of quantum circuit matrices stored in the history database 123 without performing optimization involving iterative updating of parameter values, and evaluates the plurality of quantum circuit matrices using the intermediate energies. This makes it possible to efficiently select an appropriate quantum circuit matrix.

### (c) Third Embodiment

Next, a third embodiment will be described. The information processing apparatus according to the second embodiment selects a quantum circuit matrix to be used for the current VQE execution, from a plurality of quantum circuit matrices stored in the history database. In contrast, an information processing apparatus according to the third embodiment modifies a quantum circuit matrix stored in the history database and uses the modified quantum circuit matrix for the current VQE execution. The information processing apparatus of the third embodiment may have the same hardware as that illustrated in FIG. 2. The information processing apparatus according to the third embodiment may include the same functional blocks as those illustrated in FIG. 11. Hereinafter, description of the same contents as those of the second embodiment may be omitted. The third embodiment may be described using the same reference numerals as those used in the second embodiment.

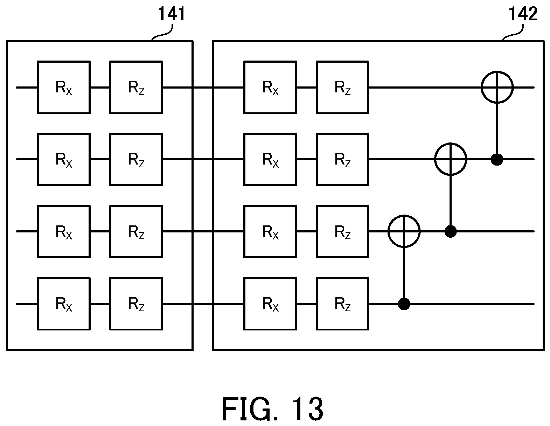

FIG. 13 illustrates an example of combining quantum circuits. The information processing apparatus 100 according to the third embodiment generates a quantum circuit having an appropriate degree of complexity by combining two or more quantum circuits stored in the history database 123.

As an example, the information processing apparatus 100 reads, from the history database 123, quantum circuit matrices representing the quantum circuits 141 and 142 based on calculated intermediate energies. The information processing apparatus 100 defines a product of a quantum circuit matrix representing the quantum circuit 141 and a quantum circuit matrix representing the quantum circuit 142. The product represents a quantum circuit in which the quantum circuit 142 is connected to the subsequent stage of the quantum circuit 141. The information processing apparatus 100 executes a VQE using the quantum circuit matrix corresponding to the product.

In the case where a repetition count of "2" or more is associated with a certain quantum circuit matrix, the information processing apparatus 100 may define a product of the quantum circuit matrix repeated a number of times specified by the repetition count and another quantum circuit matrix. Further, the information processing apparatus 100 may execute a VQE after multiplying two or more quantum circuit matrices into a single quantum circuit matrix, or may execute a VQE with the two or more quantum circuit matrices remaining separated.

The information processing apparatus 100 selects two or more quantum circuit matrices to be combined from the history database 123 according to the following policy. The information processing apparatus 100 receives a maximum size for a quantum circuit matrix from the user. The maximum size may be the number of quantum circuit matrices to be combined or the number of quantum gates included in a combined quantum circuit.

The information processing apparatus 100 selects a quantum circuit matrix that has yielded the minimum intermediate energy, as a current quantum circuit matrix. In addition, the information processing apparatus 100 selects an element having a large absolute value from a plurality of elements included in the Hamiltonian matrix. The information processing apparatus 100 identifies a dimension on which the selected element acts, among a plurality of dimensions included in a state vector, and determines whether the identified dimension is rewritten by the current quantum circuit matrix.

If the identified dimension is not rewritten, the value of the identified dimension remains unchanged from the input vector. In this case, the information processing apparatus 100 searches the history database 123 for a quantum circuit matrix that has yielded the smallest intermediate energy among the quantum circuit matrices that rewrite the identified dimension. The information processing apparatus 100 replaces the current quantum circuit matrix with the product of the current quantum circuit matrix and the found quantum circuit matrix. The information processing apparatus 100 repeatedly selects an element having a large absolute value until the size of the current quantum circuit matrix reaches the maximum size.

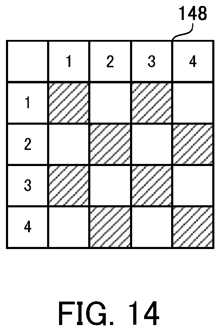

FIG. 14 illustrates an example of qubits corresponding to non-zero elements. The Hamiltonian matrix 145 of a hydrogen molecule illustrated in FIGS. 8 and 9 includes a diagonal element having a set of row and column numbers 0b0011 and 0b1100. This off-diagonal element suggests a two-qubit operation on a pair of a first qubit and a second qubit and a two-qubit operation on a pair of a third qubit and a fourth qubit.

The Hamiltonian matrix 145 includes a diagonal element having a pair of row and column numbers 0b0110 and 0b1001. This off-diagonal element suggests a two-qubit operation on a pair of the first qubit and the fourth qubit and a two-qubit operation on a pair of the second qubit and the third qubit.

A matrix 148 is obtained by replacing the positions of the non-zero elements included in the Hamiltonian matrix 145 with qubits on which the non-zero elements act. The four rows included in the matrix 148 correspond to four qubits, and the four columns included in the matrix 148 correspond to the four qubits. The matrix 148 includes eight non-zero elements and eight zero elements. The positions of the eight non-zero elements are as follows: [1, 1], [1, 3], [2, 2], [2, 4], [3, 1], [3, 3], [4, 2], and [4, 4].

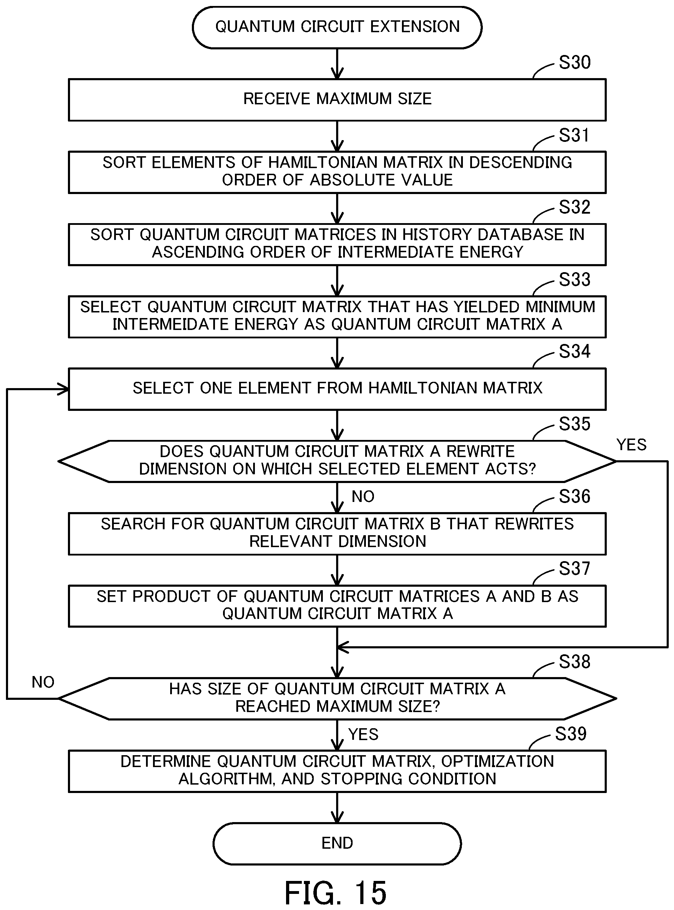

FIG. 15 is a flowchart illustrating an example procedure of quantum circuit extension. The flowchart of FIG. 15 is executed in place of steps S15 and S16 of FIG. 12. In step S30, the control unit 124 receives a maximum size from the user. In step S31, the control unit 124 sorts the elements of the Hamiltonian matrix in descending order of absolute value. In step S32, the control unit 124 sorts the quantum circuit matrices in the history database 123 in ascending order of intermediate energy calculated in step S13.

In step S33, the control unit 124 selects a quantum circuit matrix that has yielded the minimum intermediate energy as a quantum circuit matrix A. In step S34, the control unit 124 selects one element from the Hamiltonian matrix. At this time, the control unit 124 preferentially selects an element having a higher rank after the sorting, that is, an element having a larger absolute value.

In step S35, the control unit 124 determines whether the quantum circuit matrix A rewrites a dimension on which the selected element acts, among the plurality of dimensions included in the state vector. If the quantum circuit matrix A rewrites the relevant dimension, the process proceeds to step S38. If the quantum circuit matrix A does not rewrite the relevant dimension, the process proceeds to step S36.

In step S36, the control unit 124 searches the history database 123 for a quantum circuit matrix B that rewrites the relevant dimension. At this time, the control unit 124 preferentially selects a quantum circuit matrix having a higher rank after the sorting, that is, a quantum circuit matrix that has yielded a smaller intermediate energy. In step S37, the control unit 124 sets a product of the quantum circuit matrix A and the quantum circuit matrix B, as the quantum circuit matrix A.

In step S38, the control unit 124 determines whether the size of the quantum circuit matrix A has reached the maximum size. If the size of the quantum circuit matrix A has reached the maximum size, the process proceeds to step S39. If the size of the quantum circuit matrix A has not reached the maximum size, the process returns to step S34. In step S39, the control unit 124 determines a quantum circuit matrix to be used, an optimization algorithm to be used, and a stopping condition to be used. The quantum circuit matrix to be used is the quantum circuit matrix A. The optimization algorithm to be used and the stopping condition to be used are the optimization algorithm and the stopping condition associated with the quantum circuit matrix selected in step S33.

As described above, the third embodiment achieves the same effects as the second embodiment. Furthermore, in the third embodiment, the information processing apparatus 100 combines two or more quantum circuit matrices stored in the history database 123 to generate a new quantum circuit matrix. Accordingly, the information processing apparatus 100 is able to execute a VQE using the quantum circuit matrix that is not excessively simple. This makes it possible to improve the accuracy in searching for the ground-state energy.

In addition, the information processing apparatus 100 identifies an element having a large absolute value in the Hamiltonian matrix, and combines, with the quantum circuit matrix that has yielded the minimum intermediate energy, another quantum circuit matrix that acts on the same dimension as the identified element. Accordingly, the information processing apparatus 100 is able to adjust components of the state vector having a large influence on the energy, with high accuracy. This makes it possible to improve the accuracy in searching for the ground-state energy.

### (d) Fourth Embodiment

Next, a fourth embodiment will be described. As in the third embodiment, an information processing apparatus according to the fourth embodiment modifies a quantum circuit matrix stored in the history database and uses the modified quantum circuit matrix for the current VQE execution. The information processing apparatus of the fourth embodiment may have the same hardware as that illustrated in FIG. 2. The information processing apparatus of the fourth embodiment may include the same functional blocks as those illustrated in FIG. 11. Hereinafter, description of the same contents as those of the second embodiment may be omitted. The fourth embodiment may be described using the same reference numerals as those used in the second embodiment.

The information processing apparatus 100 of the fourth embodiment removes one or more quantum gates having a small influence on the intermediate energy, from a quantum circuit selected from the history database 123. After selecting a quantum circuit that has yielded the minimum intermediate energy from the history database 123, the information processing apparatus 100 repeatedly removes one quantum gate from the selected quantum circuit and performs a trial calculation of an intermediate energy again. In the case where the intermediate energy does not increase even after a certain quantum gate is removed, the information processing apparatus 100 uses the quantum circuit from which the quantum gate has been removed, for a VQE.

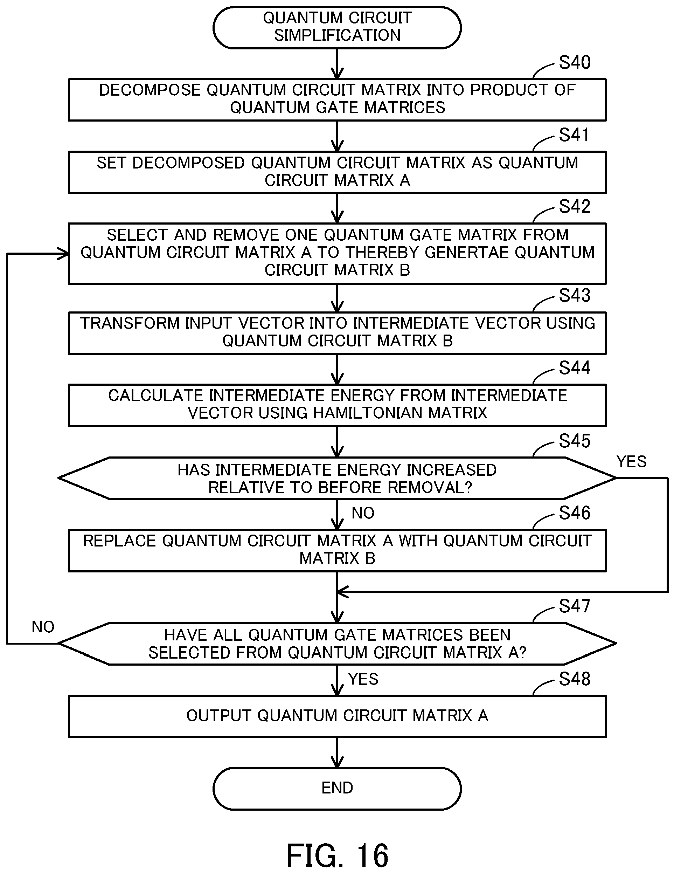

FIG. 16 is a flowchart illustrating an example procedure of quantum circuit simplification. The flowchart of FIG. 16 is executed between step S15 and step S16. The information processing apparatus 100 may execute the quantum circuit simplification of the fourth embodiment in combination with the third embodiment. In this case, the flowchart of FIG. 16 may be executed on the quantum circuit matrix A between step S38 and step S39.

In step S40, the control unit 124 decomposes the quantum circuit matrix that has yielded the minimum intermediate energy into a product of quantum gate matrices. Each quantum gate matrix represents an operation performed on one or more qubits by a quantum gate included in the quantum circuit. In this connection, if the quantum circuit matrix is already expressed as a product of quantum gate matrices, step S40 may be omitted.

In step S41, the control unit 124 sets the quantum circuit matrix decomposed into the product of the quantum gate matrices as the quantum circuit matrix A. In step S42, the control unit 124 selects and removes one quantum gate matrix from the quantum circuit matrix A to thereby generate a quantum circuit matrix after the removal as a quantum circuit matrix B. In step S43, the optimization unit 122 transforms the input vector into an intermediate vector using the quantum circuit matrix B. At this time, the optimization unit 122 assigns parameter values stored in the history database 123 to the parameters of the quantum circuit matrix B.

In step S44, the optimization unit 122 calculates an intermediate energy from the intermediate vector of step S43 using the Hamiltonian matrix. At this time, the optimization unit 122 only needs to calculate the intermediate energy once, and does not need to perform optimization involving iterative updating of the parameter values. In step S45, the control unit 124 determines whether the intermediate energy has increased relative to before the removal. If the intermediate energy has increased, the process proceeds to step S47. If the intermediate energy is less than or equal to the value before the removal, the process proceeds to step S46.

In step S46, the control unit 124 replaces the quantum circuit matrix A with the quantum circuit matrix B having fewer quantum gate matrices. Note that the intermediate energy calculated for the quantum circuit matrix B is used as the intermediate energy before removal in the next iteration.

In step S47, the control unit 124 determines whether all quantum gate matrices have been selected from the quantum circuit matrix A. If all the quantum gate matrices have been selected, the process proceeds to step S48. If there remains an unselected quantum gate matrix, the process returns to step S42. In step S48, the control unit 124 outputs the quantum circuit matrix A.

As described above, the fourth embodiment achieves the same effects as those of the second embodiment. Furthermore, in the fourth embodiment, the information processing apparatus 100 removes, from a quantum circuit matrix, components corresponding to redundant quantum gates that do not have influence on the energy of an analysis target. Accordingly, the information processing apparatus 100 is able to efficiently execute a VQE and shorten the execution time. In addition, since the number of quantum gates is reduced, noise in quantum computation is reduced, and the accuracy of the VQE is improved.

In one aspect, it becomes possible to execute a variational quantum eigensolver efficiently.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A computer program that causes a computer to perform a process comprising:
receiving a Hamiltonian (16) for calculating an energy of an analysis target from a quantum state;
combining, with reference to a database (13) associating a plurality of first quantum circuits (14a to 14c) with a plurality of first optimization methods (15a to 15c), each of the plurality of first quantum circuits with the Hamiltonian, and calculating a plurality of first energies (17a to 17c) corresponding to the plurality of first quantum circuits, each of the plurality of first quantum circuits being configured to generate a quantum state corresponding to parameter values assigned thereto, each of the plurality of first optimization methods being configured to iteratively update the assigned parameter values;
determining a second quantum circuit (14d) and a second optimization method (15d) to be used for the analysis target, based on the plurality of first energies and the database; and
calculating a second energy (18) of the analysis target based on the second quantum circuit, the Hamiltonian, and the second optimization method.

2. The computer program according to claim 1, wherein
each of the plurality of first energies is a pre-optimization energy calculated without updating the assigned parameter values, and
the second energy is a post-optimization energy calculated by iteratively updating the assigned parameter values according to the second optimization method.

3. The computer program according to claim 1 or 2, wherein the determining includes
selecting, from the plurality of first quantum circuits, a first quantum circuit corresponding to a minimum first energy among the plurality of first energies, as the second quantum circuit, and
selecting, from the plurality of first optimization methods, a first optimization method corresponding to the second quantum circuit as the second optimization method.

4. The computer program according to any of the preceding claims, wherein
the database (144) further associates a plurality of first repetition counts for repeating a same quantum circuit in series, with the plurality of first quantum circuits, and
the determining includes selecting, from the plurality of first repetition counts, a second repetition count corresponding to the second quantum circuit.

5. The computer program according to claim 1 or 2, wherein the determining includes
selecting, from the plurality of first quantum circuits, a third quantum circuit (141) and a fourth quantum circuit (142) based on the plurality of first energies, and
generating the second quantum circuit by combining the third quantum circuit and the fourth quantum circuit.

6. The computer program according to claim 5, wherein the determining includes
identifying, from among a plurality of dimensions included in a quantum state, at least one dimension on which a non-zero element included in the Hamiltonian (145) acts and on which the third quantum circuit (A) does not act, and
selecting, from the plurality of first quantum circuits, a first quantum circuit that acts on the at least one dimension, as the fourth quantum circuit (B).

7. The computer program according to claim 1 or 2, wherein the determining includes
selecting, from the plurality of first quantum circuits, a third quantum circuit (A) based on the plurality of first energies,
identifying, from among a plurality of quantum gates included in the third quantum circuit, at least one quantum gate whose removal does not increase a first energy corresponding to the third quantum circuit, and
generating the second quantum circuit (B) by removing the at least one quantum gate from the third quantum circuit.

8. A quantum circuit control method executed by a computer, the quantum circuit control method comprising:
receiving a Hamiltonian (16) for calculating an energy of an analysis target from a quantum state;
combining, with reference to a database (13) associating a plurality of first quantum circuits (14a to 14c) with a plurality of first optimization methods (15a to 15c), each of the plurality of first quantum circuits with the Hamiltonian, and calculating a plurality of first energies (17a to 17c) corresponding to the plurality of first quantum circuits, each of the plurality of first quantum circuits being configured to generate a quantum state corresponding to parameter values assigned thereto, each of the plurality of first optimization methods being configured to iteratively update the assigned parameter values;
determining a second quantum circuit(14d) and a second optimization method (15d) to be used for the analysis target, based on the plurality of first energies and the database; and
calculating a second energy (18) of the analysis target based on the second quantum circuit, the Hamiltonian, and the second optimization method.

9. An information processing apparatus comprising:
storage means (11) for storing a database (13) associating a plurality of first quantum circuits (14a to 14c) with a plurality of first optimization methods (15a to 15c), each of the plurality of first quantum circuits being configured to generate a quantum state corresponding to parameter values assigned thereto, each of the plurality of first optimization methods being configured to iteratively update the assigned parameter values; and
processing means (12) for:
receiving a Hamiltonian (16) for calculating an energy of an analysis target from a quantum state;
combining, with reference to the database, each of the plurality of first quantum circuits with the Hamiltonian, and calculating a plurality of first energies (17a to 17c) corresponding to the plurality of first quantum circuits;
determining a second quantum circuit(14d) and a second optimization method (15d) to be used for the analysis target, based on the plurality of first energies and the database; and
calculating a second energy (18) of the analysis target based on the second quantum circuit, the Hamiltonian, and the second optimization method.
